# EUROPÄISCHE PATENTSCHRIFT

(11) **EP 2 250 348 B1**
(45) Veröffentlichungstag und Bekanntmachung des Hinweises auf die Patenterteilung: **16.09.2015**
(21) Anmeldenummer: 09712699.9
(22) Anmeldetag: 17.02.2009
(51) Int. Cl.: F01D 25/28, F02C 6/12, F02C 7/20

(54) **BEFESTIGUNGSVORRICHTUNG FÜR EINEN ABGASTURBOLADER**
FASTENING DEVICE FOR AN EXHAUST TURBOCHARGER
DISPOSITIF DE FIXATION POUR UN TURBOCOMPRESSEUR DE GAZ D'ÉCHAPPEMENT

(30) Priorität: 18.02.2008 EP 08151571
(43) Veröffentlichungstag der Anmeldung: 17.11.2010
(73) Patentinhaber: ABB Turbo Systems AG, 5400 Baden (CH)
(72) Erfinder: SCHELLENBERG, Peter, 5415 Nussbaumen (CH); FLURY, Balz, CH-5436 Würenlos (CH); OESCHGER, Daniel, CH-5085 Sulz (CH); BÄTTIG, Josef, CH-5704 Egliswil (CH)
(74) Vertreter: ABB Patent Attorneys
(86) Internationale Anmeldenummer: PCT/EP2009/051830
(87) Internationale Veröffentlichungsnummer: WO 2009/103691

(56) Entgegenhaltungen:
- EP-A- 1 331 365
- EP-A- 1 669 548
- DE-A1- 4 335 485
- DE-A1- 10 116 090
- DE-B3-102004 028 125
- US-A- 1 626 760
- US-A- 2 190 170

## Beschreibung

### Technisches Gebiet

Die Erfindung bezieht sich auf das Gebiet der Strömungsmaschinen, insbesondere der Abgasturbolader für aufgeladene Brennkraftmaschinen. Sie betrifft eine Befestigungsvorrichtung zur Befestigung eines solchen Abgasturboladers auf einem Untergrund, etwa der Konsole einer Brennkraftmaschine.

### Stand der Technik

Abgasturbolader werden zur Leistungssteigerung von Brennkraftmaschinen (Hubkolbenmotoren) eingesetzt. Ein Abgasturbolader besteht aus einer Abgasturbine im Abgasstrom der Brennkraftmaschine und einem Verdichter im Ansaugtrakt der Brennkraftmaschine. Das Turbinenrad der Abgasturbine wird vom Abgasstrom der Brennkraftmaschine in Rotation versetzt und treibt über eine Welle das Laufrad des Verdichters an. Der Verdichter erhöht den Druck im Ansaugtrakt der Brennkraftmaschine, so dass beim Ansaugen eine größere Menge Luft in die Brennkammern gelangt. Der Verdichter umfasst ein Verdichtergehäuse, welches in der Regel im radial äusseren Bereich mit langen Schrauben am Lagergehäuse befestigt ist.

Zur Befestigung von Abgasturboladern auf einem Untergrund gibt es eine Reihe sehr unterschiedlicher Möglichkeiten. Da die heute eingesetzten Abgasturbolader meist ungekühlte Gehäuse aufweisen, stellt sich bei der Befestigung von Abgasturboladern auf meist verhältnismässig kühlem Untergrund das Problem von unterschiedlichen thermischen Ausdehnungen zwischen Abgasturbolader und Untergrund, welche zu Spannungen in der Befestigungsvorrichtung führen können. Um dieses Problem zu lösen werden in der Regel separate Befestigungsfüsse zwischen Abgasturbolader und Untergrund eingebracht, die durch spezielle Ausgestaltung die unterschiedlichen Ausdehnungen aufnehmen können. Ausserdem erlauben es diese Befestigungsfüsse oft auch eine räumlich variable Ausrichtung von zumindest Teilen des Gehäuses des Abgasturboladers. Separate Befestigungsfüsse der genannten Art sind beispielsweise aus DE-A-44 32 073 oder DE-OS-36 41 478 bekannt.

Die EP 1 331 365 A1 offenbart eine Befestigungsvorrichtung zur Befestigung eines Turboladers an einem Untergrund vorgestellt. Die Befestigungsvorrichtung weist zwei im Untergrund fixierbare, axial voneinander beabstandete Füsse auf. Der zweite Fuss hat einen Gehäuseverbindungsbereich, der mit dem Turboladergehäuse verbindbar ist, und einen Untergrundverbindungsbereich, der mit dem Untergrund verbindbar ist. Der Gehäuseverbindungsbereich ist in Form eines Teilkreis- oder Kreisbogens ausgebildet. Eine Axialverstrebung verbindet den Gehäuseverbindungsbereich und den Untergrundverbindungsbereich und schliesst mit dem Untergrund einen Winkel im Bereich von 0° bis 60° ein.

Die DE 43 35 485 A1 offenbart eine Einrichtung zur Befestigung eines Grossmaschinenteils auf einem zementierten Fundament, mit einem metallischen und in das Fundament kraftschlüssig einzementierten Anker, an dem das Grossmaschinenteil befestigbar ist. Zwischen dem Grossmaschinenteil und dem Fundament ist dabei eine Zwischenplatte vorgesehen, welche für die Befestigung des Grossmaschinenteils von untergeordneter Bedeutung ist.

Die US 1,626,760 offenbart eine Grundplatte für Grossmotoren, welche einen Befestigungsfuss mit zwei verschiedenen Gruppen von Befestigungsöffnungen aufweist. Die erste Gruppe von Befestigungsöffnungen ist dabei für die Befestigung der Grundplatte an einem Untergrund, die zweite Gruppe der Befestigungsöffnungen für die Befestigung der Grundplatte auf einem Traggestell vorgesehen.

Die US 2,190,170 offenbart eine Tragvorrichtung für einen Druckzylinder, bei welcher eine obere Zylinderhälfte und eine untere Zylinderhälfte miteinander verbunden sind. Die Verbindung wird mittels Befestigungsmitteln zusammengehalten, welche die untere Zylinderhälfte an einem Traggestell fixieren, jedoch eine Relativbewegung der oberen Zylinderhälfte zur unteren Zylinderhälfte zulassen.

Die EP 1 176 286 offenbart einen an ein Gasaustrittsgehäuse einteilig angebauten Befestigungsfuss, welcher beabstandet voneinander Langlöcher aufweist, deren Längsachsen sternförmig in einem Zentrum zusammentreffen. In die Langlöcher sind Gleitschuhe einsetzbar, die in ihren durchgehenden Öffnungen Befestigungselemente, wie z.B. Schrauben aufnehmen. Mittels der Schrauben wird der einteilig an das Gasaustrittsgehäuse des Turboladers angebaute Befestigungsfuss und somit der Turbolader lösbar auf dem Untergrund befestigt. Mit Starten der mit dem Abgasturbolader verbundenen Brennkraftmaschine heizen sich das Gasaustrittsgehäuse und der angebaute Befestigungsfuss gegenüber dem Untergrund auf. Die Ausdehnung des sich aufheizenden Materials kann dabei bis zu mehrere Millimeter betragen. Statt nun die Schrauben wie bei einer normalen Schraubverbindung zwischen Befestigungsfuss und Untergrund auf Biegung zu belasten, bewegt sich das sich ausdehnende Material des Befestigungsfusses sozusagen unter den die Schrauben haltenden Gleitschuhen auf dem Untergrund. Die Schrauben bleiben in den Gleitschuhen spannungsfrei geführt, während eine Relativbewegung des Gleitschuhes im Langloch stattfindet. Auch nach mehreren Temperaturzyklen tritt somit keine Materialermüdung auf und ein Sicherheitsrisiko durch eventuelles Versagen der Befestigung besteht nicht. Ein allfälliger Materialverschleiss reduziert sich bei dieser Lösung auf den Bereich der Kontaktfläche zwischen dem Befestigungsfuss und dem Untergrund, zwischen den aufeinander gleitenden Bauteilen.

### Kurze Darstellung der Erfindung

Die Aufgabe der vorliegenden Erfindung besteht darin, die Befestigungsvorrichtung zwischen dem Befestigungsfuss des Abgasturboladers und dem Untergrund derart zu verbessern, dass sowohl am Befestigungsfuss wie auch am Untergrund der Materialverschleiss reduziert werden kann.

Erfindungsgemäss wird dies erreicht, indem zwischen dem Befestigungsfuss und dem Untergrund ein grossflächiger Gleitschuh angeordnet wird. Durch form- und/oder kraftschlüssige Verbindung von Untergrund und Gleitschuh, beziehungsweise unterschiedliche Gleiteigenschaften der Kontaktflächen zwischen Untergrund und Gleitschuh sowie zwischen Gleitschuh und Befestigungsfuss kann verhindert werden, dass der Befestigungsfuss unerwünschte Verschiebungen auf dem Untergrund erfährt. Damit kann der Materialverschleiss insbesondere am Untergrund reduziert werden.

### Kurze Beschreibung der Zeichnungen

Nachfolgend wird eine Ausführungsform der Erfindung anhand von Zeichnungen detailliert erläutert. Hierbei zeigt
- Fig. 1: eine Seitenansicht eines Abgasturboladers gemäss dem Stand der Technik, und
- Fig. 2: einen Teilschnitt durch einen Abgasturbolader nach Fig. 1 mit einer erfindungsgemässen Befestigungsvorrichtung.

### Weg zur Ausführung der Erfindung

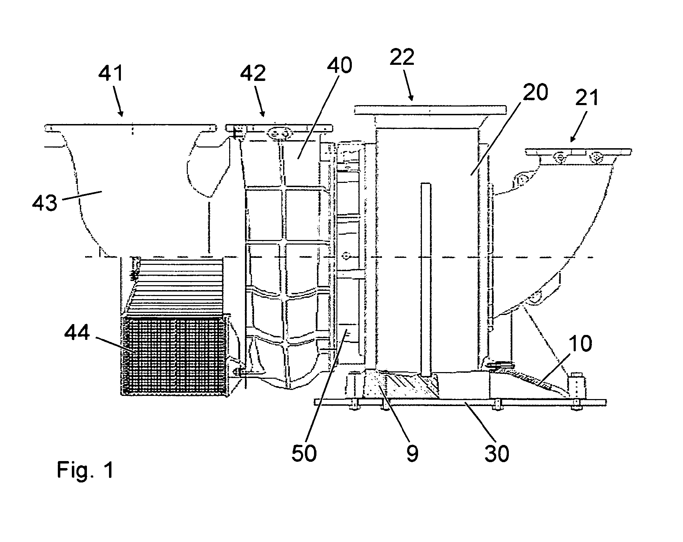

Fig. 1 zeigt in Seitenansicht entlang seiner Längsachse einen Abgasturbolader gemäss dem Stand der Technik. Der Abgasturbolader umfasst einen Verdichter in einem Verdichtergehäuse 40 sowie eine Abgasturbine in einem Turbinengehäuse 20. Dazwischen ist das Lagergehäuse 50 angeordnet, in welchem die Welle des Abgasturboladers drehbar gelagert ist. Das Verdichtergehäuse umfasst einen Lufteintritt 41 von wo aus die Luft über das Verdichterrad und einen spiralförmigen Sammelbehälter dem Luftaustritt 42 zugeführt wird. Lufteintrittsseitig kann anstelle eines Luftansaugstutzens 43 auch ein Schalldämpfer 44 angeordnet sein. Turbinenseitig wird das Abgas durch den Gaseintritt 21 auf das Turbinenrad geleitet und anschliessend durch den Gasaustritt dem Auspuff zugeführt.

Die Befestigung des Abgasturboladers erfolgt in der Regel mit zwei, axial voneinander beabstandeten Befestigungsfüssen 9 und 10. Ein erster Befestigungsfuss 9 trägt dabei die Hauptlast direkt unter dem Lagergehäuse 50 oder dem Turbinengehäuse 20. Ein zweiter, stützender Befestigungsfuss greift etwas weiter turbinenseitig am Turbinengehäuse 20 an.

Dehnt sich der zweite Befestigungsfuss aufgrund der hohen Betriebstemperaturen im Turbinenbereich stärker aus als der darunter liegende Untergrund, kann es bei herkömmlichen Befestigungsvorrichtungen zu Spannungen und Materialverschleiss im Befestigungsfuss und/ oder an dem Untergrund kommen.

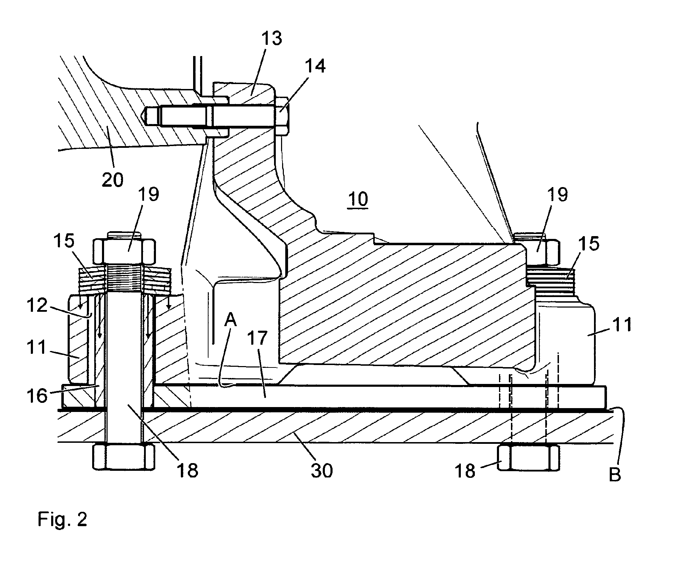

Aus diesem Grund ist bei der erfindungsgemässen Befestigungsvorrichtung nach Fig. 2 zwischen einer Kontaktfläche am Befestigungsfuss 10 und der den Untergrund bildenden Konsole 30 ein Gleitschuh 17 angeordnet. Der Befestigungsfuss 10 ist über einen Befestigungsflansch 13 und einer Schraube 14 (oder ein gleichwertiges Befestigungsmittel) mit dem Gehäuse des Abgasturboladers, in diesem Fall dem Turbinengehäuse 20 verbunden. Zur Befestigung auf der Konsole 30 umfasst der Befestigungsfuss 10 mehrere Befestigungsausläufer 11, welche jeweils eine Befestigungsbohrung 12 zur Aufnahme eines Befestigungsmittels, insbesondere einer Schraube 18, aufweisen. Im montierten Zustand ist zwischen dem Befestigungsausläufer 11 und der Konsole 30 der Gleitschuh 17 eingeklemmt. Erfindungsgemäss ist dabei die Befestigungsbohrung 12 im Befestigungsausläufer 11 derart ausgestaltet, dass sich der Befestigungsausläufer 11 auf dem Gleitschuh 17 relativ zur Schraube 18 bewegen kann. Die Bohrungen im Gleitschuh 17 und in der Konsole 30 hingegen, umfassen die Schraube 18 formschlüssig. Dadurch ist sichergestellt, dass Schraube 18, Gleitschuh 17 und Konsole 30 relativ zueinander nicht bewegt werden können. Auf der Kontaktfläche B der Konsole 30 findet somit keine Verschiebung statt. Die einzige zugelassene Verschiebung findet zwischen der Kontaktfläche A der Befestigungsausläufer 11 des Befestigungsfusses 10 und dem Gleitschuh 17 statt.

Damit die Scherkräfte auf die Schrauben 18 im Betrieb nicht zu gross werden, wenn der Gleitschuh 17 etwa relativ zur Konsole 30 zu verschieben droht, wird erfindungsgemäss die Kraft in Befestigungsrichtung auf die verschiedenen Bauteile unterschiedlich aufgeteilt.

Durch eine Gleitbuchse 16, welche als integriertes oder separates Bauteil mit dem Gleitschuh verbunden ist, sowie über ein Tellerfederpaket 15, wird die mit der Schraube 18 und der Mutter 19 bewirkte Kraft aufgeteilt. Beim Festschrauben der Mutter 19 auf dem Gewinde der Schraube 18 wird das Tellerfederpaket 15 in Befestigungsrichtung (also senkrecht zur Befestigungsebene auf der Konsole) zusammengepresst, bis es im radial inneren Bereich auf der gegenüber dem Befestigungsausläufer 11 leicht überhöhten, aus der Befestigungsöffnung 12 geringfügig herausragenden Gleitbuchse 16 aufliegt. Wird die Mutter 19 nun weiter angezogen, erhöht sich die Befestigungskraft auf die Gleitbuchse (grosse Pfeile) stärker als die ebenfalls in Befestigungsrichtung wirkende Kraft auf den Befestigungsausläufer (kleine Pfeile). Somit wird die Gleitbuchse 16 stärker gegen die Konsole 30 gepresst als der Befestigungsausläufer 11 gegen den Gleitschuh 17. Zwischen Gleitschuh 17 und Konsole 30 kommt es somit zu einem Kraftschluss. Natürlich können Mutter und Schraube auch vertauscht angeordnet sein - wie etwa in Fig. 1 -, oder es können andere Befestigungsmittel anstelle von Schraube und Mutter eingesetzt werden.

Bei gleicher Beschaffenheit der Oberflächen von Konsole 30, Gleitschuh 17 und Befestigungsausläufer 11 kommt es im Falle einer horizontalen Verschiebung des Befestigungsfusses dank der erfindungsgemässen Befestigungsvorrichtung zu einer Relativbewegung zwischen Befestigungsausläufer 11 und Gleitschuh17.

Dieser Effekt kann durch spezielle Bearbeitung der Oberflächen (Oberflächengüte, Oberflächenbeschaffenheit bezüglich Material oder Struktur) oder einer die Gleiteigenschaft beeinflussenden Beschichtung weiter verstärkt werden, etwa indem die Kontaktflächen zwischen Gleitschuh 17 und Konsole 30 aufgeraut oder aber die Kontaktflächen zwischen Befestigungsausläufer 11 und Gleitschuh geglättet und/ oder gehärtet werden.

Zwischen dem Federpaket 15 und der Auflagefläche am Befestigungsausläufer 11 des Befestigungsfusses 10 kann optional ein Gleitelement angeordnet sein, welches ein besseres Gleiten der Federpakete auf der Auflagefläche am Befestigungsausläufer bei gleich bleibender Kraftübertragung in Befestigungsrichtung ermöglicht.

Durch Einlegen eines Führungselementes kann ein gerichtetes Gleiten des Befestigungsfusses auf dem Gleitschuh erzwungen werden. Dabei wird beispielsweise ein Vorsprung auf dem Gleitschuh in einer entsprechenden Nut am Befestigungsfuss geführt. Auch andere Führungselemente, wie etwa Passfedern, können hierfür eingesetzt werden.

### Bezugszeichenliste

- 9, 10: Befestigungsfuss
- 11: Befestigungsausläufer
- 12: Befestigungsbohrung
- 13: Befestigungsflansch
- 14: Schraube (Befestigungsmittel)
- 15: Tellerfedern (Federelement)
- 16: Gleitbuchse
- 17: Gleitschuh
- 18: Schraube (Befestigungsmittel)
- 19: Mutter (Befestigungsmittel)
- 20: Turbinengehäuse
- 21: Gaseintritt
- 22: Gasaustritt
- 30: Befestigungskonsole
- 40: Verdichtergehäuse
- 41: Luftaustritt
- 42: Lufteintritt
- 43: Luftansaugstutzen
- 44: Schalldämpfer
- A: Kontaktfläche des Befestigungsfusses
- B: Kontaktfläche der Konsole

## Patentansprüche

1. Befestigungsvorrichtung für die Befestigung eines Abgasturboladers auf einer Konsole (30), umfassend einen Befestigungsfuss (10) mit einer Befestigungsbohrung (12) sowie in dieser Befestigungsbohrung (12) lose geführte Befestigungsmittel (18, 19), **dadurch gekennzeichnet, dass** zwischen einer Kontaktfläche (A) des Befestigungsfusses (10) und einer Kontaktfläche (B) der Konsole (30) ein Gleitschuh (17) angeordnet ist, welcher Gleitschuh (17) mit der Kontaktfläche (A) des Befestigungsfusses (10) eine Gleitfläche bildet, entlang welcher der Befestigungsfuss (10) relativ zum Gleitschuh (17) und dem Befestigungsmittel (18, 19) bewegt werden kann, und welcher Gleitschuh (17) mittels der Befestigungsmittel (18, 19) formschlüssig mit der Konsole (30) verbunden ist, so dass Befestigungsmittel (18, 19), Gleitschuh (17) und Konsole (30) relativ zueinander nicht bewegt werden können, so dass die einzige zugelassene Verschiebung des Gleitschuhs (17) auf der Kontaktfläche (A) des Befestigungsfusses (10) stattfinden kann und auf der Kontaktfläche (B) der Konsole (30) keine Verschiebung des Gleitschuhs (17) stattfinden kann.

2. Befestigungsvorrichtung nach Anspruch 1, wobei der Gleitschuh (17) eine Gleitbuchse (16) umfasst, welche in der Befestigungsbohrung (12) angeordnet ist und der Kraftübertragung vom Befestigungsmittel (18, 19) auf die Konsole (30) dient, wobei die Gleitbuchse (16) gegenüber dem Befestigungsfuss (10) in Befestigungsrichtung eine grössere Länge aufweist und an dem der Konsole abgewandten Ende der Befestigungsbohrung (12) aus der Befestigungsbohrung (12) herausragt.

3. Befestigungsvorrichtung nach Anspruch 2, wobei die Befestigungsmittel (18, 19) Kräfte in Befestigungsrichtung bewirken und diese Kräfte mittels Federelementen (15) unterschiedlich stark auf die Gleitbuchse (16) und den Befestigungsfuss (10) aufgeteilt werden.

4. Befestigungsvorrichtung nach Anspruch 3, wobei die Kräfte auf die Gleitbuchse (16) und den Befestigungsfuss (10) mittels Tellerfedern (15) aufgeteilt werden.

5. Befestigungsvorrichtung nach einem der Ansprüche 1 bis 4, wobei die Kontaktfläche (A) des Befestigungsfusses und/ oder die mit dieser die Gleitfläche bildende Oberfläche des Gleitschuhs (17) zur verbesserten Gleitfähigkeit bearbeitet oder beschichtet ist.

6. Befestigungsvorrichtung nach einem der Ansprüche 1 bis 5, wobei die Kontaktfläche (B) der Konsole und/ oder die auf dieser aufliegende Oberfläche des Gleitschuhs (17) zur verbesserten Haftung bearbeitet oder beschichtet ist.

7. Abgasturbolader, umfassend eine Befestigungsvorrichtung nach einem der Ansprüche 1 bis 6.

8. Brennkraftmaschine und Abgasturbolader, umfassend eine Befestigungsvorrichtung für die Befestigung des Abgasturboladers auf einer Konsole (30) der Brennkraftmaschine nach einem der Ansprüche 1 bis 6.

## Claims

1. Fastening device for the fastening of an exhaust-gas turbocharger to a bracket (30), comprising a fastening foot (10) with a fastening bore (12) and comprising fastening means (18, 19) guided loosely in said fastening bore (12), **characterized in that**, between a contact surface (A) of the fastening foot (10) and a contact surface (B) of the bracket (30), there is arranged a slide shoe (17), which slide shoe (17) forms, together with the contact surface (A) of the fastening foot (10), a slide surface along which the fastening foot (10) can be moved relative to the slide shoe (17) and the fastening means (18, 19), and which slide shoe (17) is connected in positively locking fashion to the bracket (30) by way of the fastening means (18, 19), such that fastening means (18, 19), slide shoe (17) and bracket (30) cannot be moved relative to one another, such that the only permitted displacement of the slide shoe (17) is on the contact surface (A) of the fastening foot (10), and no displacement of the slide shoe (17) on the contact surface (B) of the bracket (30) is possible.

2. Fastening device according to Claim 1, wherein the slide shoe (17) comprises a slide bushing (16) which is arranged in the fastening bore (12) and which serves for transmitting force from the fastening means (18, 19) to the bracket (30), wherein the slide bushing (16) has a greater length than the fastening foot (10) in a fastening direction and projects out of the fastening bore (12) at that end of the fastening bore (12) which faces away from the bracket.

3. Fastening device according to Claim 2, wherein the fastening means (18, 19) impart forces in the fastening direction, and said forces are distributed with differing intensity to the slide bushing (16) and to the fastening foot (10) by way of spring elements (15).

4. Fastening device according to Claim 3, wherein the forces are distributed to the slide bushing (16) and the fastening foot (10) by way of disc springs (15).

5. Fastening device according to one of Claims 1 to 4, wherein the contact surface (A) of the fastening foot and/or that surface of the slide shoe (17) which forms the slide surface together with said contact surface is machined or coated in order to be provided with improved sliding properties.

6. Fastening device according to one of Claims 1 to 5, wherein the contact surface (B) of the bracket and/or that surface of the slide shoe (17) which bears on said contact surface is machined or coated in order to be provided with improved adhesive properties.

7. Exhaust-gas turbocharger comprising a fastening device according to one of Claims 1 to 6.

8. Internal combustion engine and exhaust-gas turbocharger, comprising a fastening device according to one Claims 1 to 6 for the fastening of the exhaust-gas turbocharger to a bracket (30) of the internal combustion engine.

## Revendications

1. Dispositif de fixation pour la fixation d'un turbocompresseur à gaz d'échappement sur une console (30), comportant un pied de fixation (10) doté d'un alésage de fixation (12) ainsi que des moyens de fixation (18, 19) guidés de manière lâche dans cet alésage de fixation (12), **caractérisé en ce qu'**un patin de glissement (17) est disposé entre une surface de contact (A) du pied de fixation (10) et une surface de contact (B) de la console (30), lequel patin de glissement (17) forme avec la surface de contact (A) du pied de fixation (10) une surface de glissement le long de laquelle le pied de fixation (10) peut être déplacé par rapport au patin de glissement (17) et au moyen de fixation (18, 19), et lequel patin de glissement (17) est relié à la console (30) par engagement par complémentarité de formes grâce aux moyens de fixation (18, 19), de telle sorte que les moyens de fixation (18, 19), le patin de glissement (17) et la console (30) ne puissent pas être déplacés les uns par rapport aux autres, de telle sorte que le seul déplacement permis du patin de glissement (17) puisse avoir lieu sur la surface de contact (A) du pied de fixation (10) et qu'aucun déplacement du patin de glissement (17) ne puisse avoir lieu sur la surface de contact (B) de la console (30).

2. Dispositif de fixation selon la revendication 1, dans lequel le patin de glissement (17) comporte une douille de glissement (16), laquelle est disposée dans l'alésage de fixation (12) et sert à la transmission de force du moyen de fixation (18, 19) à la console (30), la douille de glissement (16) présentant une plus grande longueur dans la direction de fixation par rapport au pied de fixation (10) et faisant saillie hors de l'alésage de fixation (12) à l'extrémité de l'alésage de fixation (12) opposée à la console.

3. Dispositif de fixation selon la revendication 2, dans lequel les moyens de fixation (18, 19) produisent des forces dans la direction de fixation et ces forces sont réparties avec des intensités différentes sur la douille de glissement (16) et sur le pied de fixation (10) au moyen d'éléments de ressort (15).

4. Dispositif de fixation selon la revendication 3, dans lequel les forces sont réparties sur la douille de glissement (16) et sur le pied de fixation (10) au moyen de rondelles-ressorts (15).

5. Dispositif de fixation selon l'une quelconque des revendications 1 à 4, dans lequel la surface de contact (A) du pied de fixation et/ou la surface du patin de glissement (17) formant avec celle-ci la surface de glissement sont usinées ou revêtues pour améliorer la capacité de glissement.

6. Dispositif de fixation selon l'une quelconque des revendications 1 à 5, dans lequel la surface de contact (B) de la console et/ou la surface du patin de glissement (17) reposant sur celle-ci sont usinées ou revêtues pour améliorer l'adhérence.

7. Turbocompresseur à gaz d'échappement, comportant un dispositif de fixation selon l'une quelconque des revendications 1 à 6.

8. Moteur à combustion interne et turbocompresseur à gaz d'échappement, comportant un dispositif de fixation pour la fixation du turbocompresseur à gaz d'échappement sur une console (30) du moteur à combustion interne selon l'une quelconque des revendications 1 à 6.
